# EUROPÄISCHE PATENTSCHRIFT

(11) **EP 2 008 350 B1**
(45) Veröffentlichungstag und Bekanntmachung des Hinweises auf die Patenterteilung: **17.02.2016**
(21) Anmeldenummer: 07724285.7
(22) Anmeldetag: 17.04.2007
(51) Int. Cl.: H02H 7/08

(54) **VORRICHTUNG ZUM BETREIBEN EINER ELEKTRISCHEN MASCHINE**
DEVICE FOR OPERATING AN ELECTRIC MOTOR
DISPOSITIF POUR FAIRE FONCTIONNER UNE MACHINE ÉLECTRIQUE

(30) Priorität: 19.04.2006 DE 102006018054
(43) Veröffentlichungstag der Anmeldung: 31.12.2008
(73) Patentinhaber: DaimlerChrysler AG, 70327 Stuttgart (DE)
(72) Erfinder: REHM, Lothar, 71083 Herrenberg (DE); VON RAUMER, Thomas, 70565 Stuttgart (DE)
(74) Vertreter: JENSEN & SON
(86) Internationale Anmeldenummer: PCT/EP2007/003347
(87) Internationale Veröffentlichungsnummer: WO 2007/121888

(56) Entgegenhaltungen:
- DE-A1- 4 311 219
- DE-A1- 10 205 963

## Beschreibung

Die Erfindung betrifft eine Vorrichtung zum Betreiben einer elektrischen Maschine nach Anspruch 1 und ein Verfahren dazu nach Anspruch 2.

Aus der DE 102 05 963 A1 ist ein Verfahren und Ansteuersystem zum Ansteuern einer permanenterregten Maschine bekannt, wobei jeder Phase der elektrischen Maschine eine Halbbrückenanordnung mit einem ersten und einem zweiten Schaltelement zur Stromversorgung über einen Zwischenkreis zugeordnet ist. Es wird ein Betriebszustand eines Ansteuersystems überwacht und mit einem Schwellwert verglichen. Bei Überschreiten des Schwellwertes wird ein Fehlerzustand detektiert und ein Kurzschluss zwischen den Phasen der elektrischen Maschine erzeugt.

Aus der DE 43 11 219 A1 ist ein Verfahren und eine Vorrichtung zum Betreiben einer elektrischen Maschine bekanntmit einem Reglermodul, wobei die elektrische Maschine durch das Reglermodul abschaltbar ist. Es ist außerdem eine Sicherheitsschaltung vorgesehen, durch welche die elektrische Maschine abschaltbar ist.

Aufgabe der Erfindung ist es, eine fehlerhafte Ansteuerung einer elektrischen Maschine zu verhindern.

Diese Aufgabe wird durch eine erfindungsgemäße Vorrichtung gelöst, bei der die elektrische Maschine durch das externe Steuergerät abschaltbar ist. Damit ist es dem externen Steuergerät möglich, die elektrische Maschine abzuschalten, wenn das externe Steuergerät erkennt, dass ein für die Ansteuerung der elektrischen Maschine relevanter Fehler vorliegt. Dabei werden in der vorliegenden Druckschrift nur solche Abweichungen vom Soll, Signalerfassungs- oder Signalübertragungsfehler, Unstimmigkeiten oder Grenzwertüberschreitungen als Fehler betrachtet, die für die Ansteuerung der elektrischen Maschine 1 relevant sind, also zu unerwünschten Folgen führen können. Wird im Weiteren von einem Fehler gesprochen, so ist ein Fehler in diesem Sinne gemeint.

Auf diese Weise wird verhindert, dass die elektrische Maschine fehlerhaft angesteuert wird. Beispielsweise könnte die elektrische Maschine durch eine fehlerhafte Ansteuerung ein unerwünscht hohes Moment oder eine zu hohe Drehzahl erzeugen. Dadurch könnte sich eine Überlastung der elektrischen Maschine oder ein unerwünschtes Verhalten eines von der elektrischen Maschine angetriebenen Aggregates oder Fahrzeuges ergeben.

Das erfindungsgemäße Verfahren sieht vor, dass ein externes Steuergerät ein Abschaltsignal an ein Ansteuersystem der elektrischen Maschine sendet, wenn das externe Steuergerät einen Fehler erkennt.

Damit erhält das Ansteuersystem der elektrischen Maschine die Information über das Vorliegen eines extern erkannten Fehlers und kann entsprechend reagieren.

Im einfachsten Fall wirkt das Abschaltsignal direkt auf die Endstufe der elektrischen Maschine, die in dieser Druckschrift als Teil des Ansteuersystems der elektrischen Maschine aufgefasst wird. Dabei kann das Abschaltsignal so ausgeführt sein, dass es die Information enthält, ob die Endstufe einen Dreiphasenkurzschluss durchführen oder alle Leistungsschalter öffnen soll.

In einer anderen Ausführungsform gibt das Abschaltsignal der externen Steuereinheit nur vor, dass eine Abschaltung der elektrischen Maschine erfolgen soll. In diesem Fall entscheidet das Ansteuersystem der elektrischen Maschine, ob und welche Abschaltung durchgeführt wird.

Bei dem externen Steuergerät kann es sich beispielsweise um eine Fahrzeugsteuerung eines Kraftfahrzeuges handeln, in der die Informationen eines aktiven Fahrwerks oder einer Traktionserkennung der Räder verarbeitet werden, und/oder um eine Motorsteuerung, welche die Ansteuerung der elektrischen Maschine mit einem Verbrennungsmotor und ggf. weiteren elektrischer Maschinen koordiniert.

Weitere vorteilhafte Ausgestaltungen der Erfindung ergeben sich aus den Unteransprüchen und anhand der Zeichnungen.

Dabei zeigen:
- Fig. 1: eine schematische Schaltungsskizze eines Ansteuersystem einer elektrischen Maschine und eines damit verbundenen externen Steuergerätes,
- Fig. 2: eine schematische Schaltungsskizze eines Ansteuersystems in Verbindung mit einer permanenterregten elektrischen Maschine.

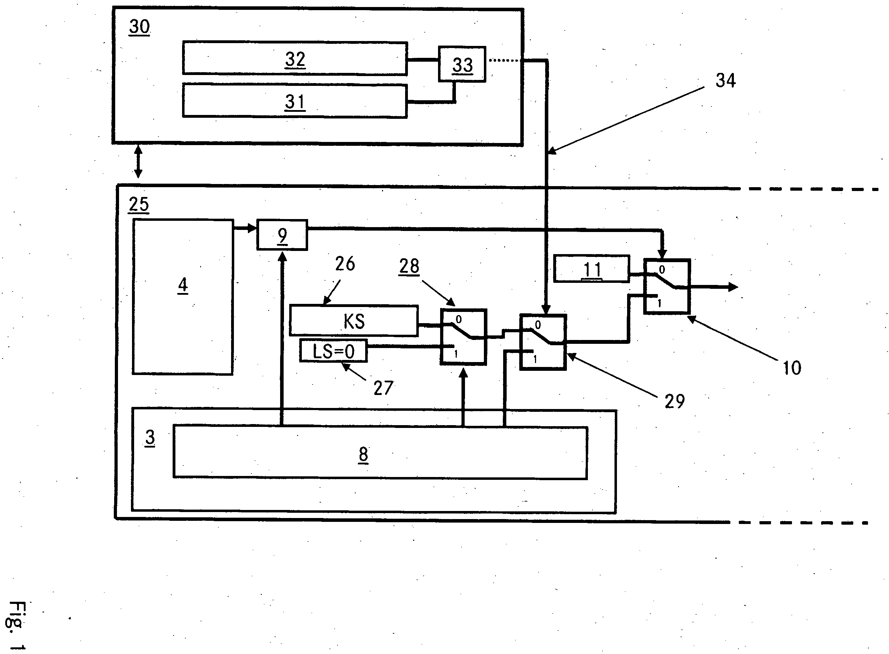

Fig. 1 zeigt ein Ansteuersystem 25 einer nicht dargestellten elektrischen Maschine 1 und ein externes Steuergerät 30. Das externe Steuergerät 30 tauscht über einen Datenbus oder eine vergleichbare andere bidirektionale Kommunikationsmöglichkeit Daten mit dem Ansteuersystem 25 der elektrischen Maschine 1 aus. Auch auf diesem Wege können Fehlerinformationen weitergegeben werden. Die Weitergabe und Auswertung ist aber so gestaltet, dass sie zur Durchführung einer schnellen Sicherheitsabschaltung ungeeignet ist.

In der in Fig. 1 dargestellten Ausführungsform weist das externe Steuergerät 30 einen Funktionsrechner 31, einen Überwachungsrechner 32 und eine Logikeinrichtung 33 auf.

Die Logikeinrichtung 33 ist über eine Signalleitung mit dem Funktionsrechner 31 verbunden und ist über eine weitere Signalleitung mit dem Überwachungsrechner 32 verbunden. Erkennt der Funktionsrechner 31 oder der Überwachungsrechner 32 einen für die Ansteuerung der elektrischen Maschine 1 relevanten Fehler, so sendet er über die ihm zugeordnete Signalleitung ein Fehlersignal an die Logikeinrichtung 33.

Die Logikeinrichtung 33 des externen Steuergerätes 30 ist über einen Abschaltpfad 34 mit dem Ansteuersystem 25 verbunden. Die Logikeinrichtung 33 gibt dann ein Abschaltsignal über den Abschaltpfad 34 an das Ansteuersystems 25 der elektrischen Maschine 1 weiter, wenn der Funktionsrechner 31 oder der Überwachungsrechner 32 oder beide einen Fehler erkennen.

Ein Teil des Abschaltpfades 34 ist gepunktet gezeichnet. Damit soll dargestellt werden, dass zwischen dem Ausgang der Logikeinrichtung 33 und dem Ausgang des externen Steuergerätes 30 noch eine Aufbereitung oder Weiterverarbeitung des Ausgangsignals der Logikeinrichtung 33 vorgesehen sein kann.

Dadurch, dass das Abschaltsignal des externen Steuergerätes 30 an das Ansteuersystem 25 weitergegeben wird, kann die von der externen Steuergerät 30 ausgelöste Abschaltreaktion in einen Abschaltpfad des Ansteuersystems 25 integriert werden.

Dadurch, dass ein separater Abschaltpfad 34 vorgesehen ist, wird eine schnelle Reaktion der elektrischen Maschine auf extern erkannte Fehler ermöglicht. Dazu weist der Abschaltpfad vorzugsweise eine Übertragungsrate auf, die gegenüber der sonstigen Datenübertragung zwischen externem Steuergerät 30 und Ansteuersystem 25 schnell ist. Bevorzugt ist der Weg des Abschaltpfades 34 so gewählt, dass unnötige Umwege, z.B. über den Funktionsrechner 3 des Ansteuersystems 25 vermieden werden.

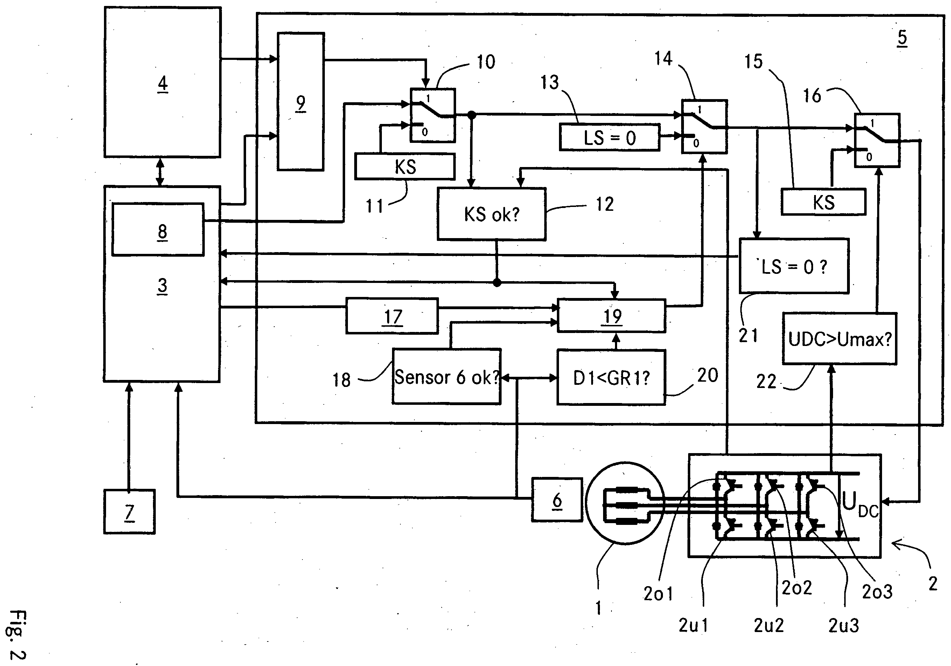

Das Ansteuersystem 25 der elektrischen Maschine 1 ist in Fig. 1, wie durch gestrichelte Umrandung angedeutet wird, nur unvollständig dargestellt. Es weist einen Funktionsrechner 3, einen Überwachungsrechner 4 und verschiedene Logikeinrichtungen 9, 10, 11, 26, 27, 28, 29 auf. Wie in Fig. 2 dargestellt, können diese Logikeinrichtungen 9, 10, 11, 26, 27, 28, 29 in einem Logikbaustein 5 angeordnet sein.

In der in Fig. 1 dargestellten Ausführungsform ist die Logikeinrichtung 33 des externen Steuergerätes direkt oder indirekt mit einer Schalteinrichtung 29 des Ansteuersystems 25 verbunden.

Nach Maßgabe des über die Abschaltleitung 34 übertragenen Abschaltsignals des externen Steuergerätes 30 nimmt die Schalteinrichtung 29 eine als 0-Stellung bezeichnete Schaltstellung oder eine als 1-Stellung bezeichnete Schaltstellung ein. Ebenso können die zwei Zustände durch verschiedene Signalarten oder verschiedene Signalniveaus, dargestellt werden.

Beispielsweise ist diese abschaltsignalabhängige Umschaltung so ausgeführt, dass zwei unterschiedliche Zustände dadurch dargestellt werden, dass unterschieden wird, ob ein Abschaltsignal oder kein Abschaltsignal anliegt. Liegt kein Abschaltsignal des externen Steuergerätes 30 auf der Abschaltleitung 34, so befindet sich das Steuerelement 29 in einer 1-Stellung und verbindet einen Teilbereich 8 des Funktionsrechners 3 mit einer Schalteinrichtung 10.

Liegt ein Abschaltsignal des externen Steuergerätes 30 auf der Abschaltleitung 34, so befindet sich das Steuerelement 29 in einer 0-Stellung und verbindet eine Schalteinrichtung 28 des Überwachungsrechners 4 mit einer Schalteinrichtung 10. Wie in Fig. 2 dargestellt gibt die Schalteinrichtung 10 die von der Schalteinrichtung 28 ausgegebenen Informationen zur Abschaltung der elektrischen Maschine letztlich an eine Endstufe 2 der elektrischen Maschine 1 weiter. Damit kann eine Abschaltung der elektrischen Maschine erfolgen, wenn eine externe Steuereinheit einen Fehler erkennt, auch wenn die Ansteuerung der elektrischen Maschine selbst keinen Fehler erkennt. Dadurch wird die Fehlererkennungsrate erhöht und die elektrische Maschine besser vor einer fehlerhaften Ansteuerung geschützt.

Die Schalteinrichtung 28 gibt die Informationen für einen Dreiphasenkurzschluss (KS) aus, wenn sie sich in 0-Stellung 0 befindet. Sie gibt die Informationen für ein Öffnen aller Leistungsschalter der Endstufe 2 der elektrischen Maschine 1 aus (LS=0), wenn sich die Schalteinrichtung 28 in 1-Stellung befindet.

Die Schalteinrichtung 28 ist über eine Steuerleitung mit dem Teilbereich 8 des Funktionsrechners 3 verbunden. Nach Maßgabe des an dieser Steuerleitung anliegenden Signals nimmt die Schalteinrichtung 28 die 0-Stellung oder die 1-Stellung ein. Damit kann abhängig von Informationen des Funktionsrechners 3 eine Abschaltung über einen Dreiphasenkurzschluss oder ein Öffnen aller Leistungsschalter der Endstufe 2 erfolgen. Diese Entscheidung kann beispielsweise davon abhängig gemacht werden, ob der Funktionsrechner 3 erkennt, dass eine erfasste Drehzahl einen zugehörigen Grenzwert unterschreitet.

Wie in Fig. 1 angedeutet, ist auch das Ansteuersystem 25 in der Lage, unabhängig von einem externen Steuergerät 30 eine Abschaltung der elektrischen Maschine 1 auszulösen und durchzuführen. In Fig. 2 ist dies beispielhaft für die Abschaltung einer permanenterregten Maschine dargestellt. Dabei ist die in Fig. 2 dargestellte Ausführungsform so ausgebildet, dass die abgeschaltete Maschine 1 kein nennenswertes Bremsmoment erzeugt.

Fig.2 zeigt eine schematische Schaltungsskizze eines Ansteuersystems in Verbindung mit einer permanenterregten elektrischen Maschine 1.

Die elektrische Maschine 1 ist mit einer Endstufe 2 verbunden. Die Endstufe 2 kann als Umrichter bzw. als Stromrichter ausgebildet sein. Die dargestellte Endstufe 2 weist drei obere Schaltelemente 2o1, 2o2, 2o3 und drei untere Schaltelemente 2u1, 2u2, 2u3 auf. Die Schaltelemente sind typischerweise als Leistungsschalter ausgebildet. Die Schaltelemente bilden drei Halbbrückenanordnungen die aus jeweils zwei der Schaltelementen 2o1, 2u1; 2o2, 2u2 und 2o3, 2u3 gebildet werden und jeweils eine der drei Phasen der elektrischen Maschine 1 ansteuern.

Die Endstufe 2 ist über einen, in Fig. nicht dargestellten. Hauptschütz mit einer, ebenfalls in Fig. 1 nicht dargestellten, Versorgungseinrichtung der elektrischen Maschine 1 (z.B. einer Batterie) verbunden. Die Versorgungseinrichtung versorgt die Endstufe 2 mit einer Versorgungsspannung U_DC. Über den Hauptschütz kann die Versorgungseinrichtung ein- und ausgeschaltet werden.

Die Endstufe 2 ist mit einem Logikbaustein 5 verbunden und wird von diesem angesteuert. Außerdem gibt die Endstufe 2 Informationen über die Versorgungsspannung U_DC und Informationen über eine korrekte Umsetzung eines Dreiphasenkurzschlusses an den Logikbaustein 5 weiter. Ebenso können Informationen über eine korrekte Umsetzung eine Öffnung der Schaltelemente 2o1, 2o2; 2o3, 2u1, 2u2 oder 2u3 oder über eine Spannung U_CE eines Schaltelements 2o1, 2o2, 2o3, 2u1, 2u2,oder 2u3 an den Logikbaustein 5 weitergegeben werden.

Der Logikbaustein 5 ist mit einem Funktionsrechner 3 und einem Überwachungsrechner 4 verbunden und erhält von diesen Daten. Der Funktionsrechner 3 und der Überwachungsrechner 4 sind ebenfalls miteinander verbunden und tauschen miteinander Daten aus. Dabei überwacht der Überwachungsrechner 4 den fehlerfreien Betrieb des Funktionsrechners 3.

Der Funktionsrechner 3 erhält die Informationen eines Drehzahlsensors 6, welcher bevorzugt eine Drehzahl D1 der elektrischen Maschine 1 erfasst.

Darüber hinaus können ein oder mehrere weitere Drehzahlsensoren 7 zur Erfassung einer oder mehrerer Drehzahlen D2 vorgesehen sein. Beispielsweise kann als Drehzahl D2 ebenfalls die Drehzahl der elektrischen Maschine 1 erfasst werden. Ebenso kann eine Drehzahl eines mit der elektrischen Maschine 1 verbundenen Getriebes, eine Raddrehzahl eines Fahrzeugrades oder eine andere relevante Drehzahl erfasst werden. Bevorzugt ist der Drehzahlsensor 7 ein Raddrehzahlsensor eines Fahrzeugrades eines elektronischen Stabilitätsprogramms.

In Fig. 2 ist der Drehzahlsensor 7 mit dem Funktionsrechner 3 verbunden. Über diese Verbindung erhält der Funktionsrechner 3 Informationen des Drehzahlsensors 7 über die erfasste Drehzahl D2.

Der Funktionsrechner 3 weist einen Bereich 8 auf. Dieser Bereich 8 wird bei einem Zwei-Ebenen-Überwachungssystem oder einem Drei-Ebenen-Überwachungssystem als erste Ebene bezeichnet. In diesem Fall wird die erste Ebene von einer zweiten,Ebene und ggf. einer dritten Ebene überwacht. In dem Bereich 8 des Funktionsrechners 3 werden die aktuellen Ansteuersignale zur Ansteuerung der elektrischen Maschine 1 berechnet. Diese Ansteuersignale werden von dem Bereich 8 des Funktionsrechners 3 an einen Schalter 10 des Logikbausteins 5 weitergegeben.

Der Schalter 10 des Logikbausteins 5 gibt die Ansteuersignale über eine Steuerleitung an einen Schalter 14 des Logikbausteins 5 weiter. Der Schalter 14 des Logikbausteins 5 gibt die Ansteuersignale über eine Steuerleitung an einen Schalter 16 des Logikbausteins 5 weiter. Der Schalter 16 des Logikbausteins 5 gibt die Ansteuersignale über eine Steuerleitung an die Endstufe 2 weiter. Die Endstufe 2 stellt ihre Schaltelemente 2o1, 2o2, 2o3, 2u1, 2u2, 2u3 nach Maßgabe der Ansteuersignale ein und steuert die elektrische Maschine 1 entsprechend den Ansteuersignalen an.

Der Funktionsrechner 3 ist über einen Abschaltpfad mit einem Element 9 des Logikbausteins 5 verbunden. Dabei wird als Abschaltpfad eine Verbindung bezeichnet, über die wahlweise ein Freigabesignal oder ein Abschaltsignal weitergegeben werden kann.

Der Überwachungsrechner 4 ist ebenfalls über einen Abschaltpfad mit dem Element 9 des Logikbausteins 5 verbunden.

In einer bevorzugten Ausführungsform ist das Abschaltsignal als spannungsfreier Defaultzustand vorgesehen. Wird durch einen Fehler kein Signal vom Funktionsrechner 3 oder von Überwachungsrechner 4 an den Logikbaustein 5 übertragen, so interpretiert der Logikbaustein 5 dies als Abschaltsignal.

Das Element 9 ist in der in Fig. 2 dargestellten Ausführungsform als ein "logisches UND" ausgebildet. Element 9 kann wie alle Elemente des Logikbausteins 5 als ein Elektronikbauteil, als eine Struktur innerhalb eines Logikbausteins oder mittels einer Software dargestellt werden. Empfängt das "logische UND" 9 sowohl vom Funktionsrechner 3 als auch vom Überwachungsrechner 4 ein Freigabesignal, so gibt es ein Freigabesignal an den Schalter 10 weiter, ansonsten gibt es ein Abschaltsignal weiter.

In einer alternativen Ausführungsform ist das Element 9 als ein "logisches ODER" oder dergleichen ausgeführt. In diesem Falle gibt das Element 9 dann ein Abschaltsignal an den Schalter 10, wenn es vom Funktionsrechner 3 oder vom Überwachungsrechner 4 oder von beiden ein Abschaltsignal erhält.

Empfängt der Schalter 10 ein Abschaltsignal vom Element 9, so schaltet er um und unterbricht so die Weitergabe der von Bereich 8 der Funktionsrechners 3 berechneten Ansteuersignale. Anstatt der Ansteuersignale von Bereich 8 werden nunmehr die Ansteuersignale eines Elements 11 des Logikbausteins 5 weitergegeben. Dabei handelt es sich bei dem Element 11 typischerweise um einen permanenten Speicher, in dem die Ansteuersignale für einen Dreiphasenkurzschluss fest hinterlegt sind.

Diese Ansteuersignale des Elements 11 werden über den Schalter 10 in die Steuerleitung eingespeist und über Schalter 14 und Schalter 16 an die Endstufe 2 weitergegeben. Die Endstufe 2 stellt ihre Schaltelemente 2o1, 2o2, 2o3, 2u1, 2u2, 2u3 nach Maßgabe der Ansteuersignale für einen Dreiphasenkurzschluss ein und erzeugt so einen Dreiphasenkurzschluss der elektrische Maschine 1.

Dabei können die Ansteuersignale einen Dreiphasenkurzschluss der Schaltelemente 2o1, 2o2, 2o3 oder der Schaltelemente 2u1, 2u2, 2u3 vorsehen. Auch kann vorgesehen sein, auf die jeweils andere Variante eines Dreiphasenkurzschlusses zu wechseln, wenn Informationen über den Betriebszustand der Schaltelemente 2o1, 2o2, 2o3, 2u1, 2u2, 2u3 den Schluss zulassen, dass der gewählte Dreiphasenkurzschluss nicht fehlerfrei durchgeführt werden kann oder durchgeführt wurde.

Der Schalter 14 ist mit einem Element 19 verbunden. Das Element 19 ist eine Logik, die bei Vorliegen festgelegter Eingangsdaten ein Abschaltsignal an einen Schalter 14 sendet. Dabei bewirkt das Abschaltsignal, dass der Schalter 14 in einen Schaltzustand geschaltet wird, in dem er ihm zugeordnete Ansteuersignale zur Abschaltung der elektrischen Maschine 1 weitergeben kann.

Das Element 19 ist über ein Element 20 mit dem Drehzahlsensor 6 verbunden. Das Element 20 erhält vom Drehzahlsensor 6 Informationen über die vom Drehzahlsensor 6 erfasste Drehzahl D1. Bei der Drehzahl D1 handelt es sich bevorzugt um eine Drehzahl der elektrischen Maschine 1. Das Element 20 überprüft, ob die Drehzahl D1 unter einem Grenzwert GR1 liegt. In einer vereinfachten Ausführungsform gibt in das Element 20 ein Signal an das Element 19 weiter, wenn dies der Fall ist.

In einer Weiterbildung dieser Ausführungsform wird überprüft, ob der Drehzahlsensor 6 und die Signalübertragung des Wertes für D1 fehlerfrei arbeiten. In Fig. 1 ist diese Prüfung in einem Element 18 angeordnet. Dabei wertet Element 19 die vom Element 20 zugeführte Information über die Drehzahl D1 des Sensors 6 nur dann aus, wenn zusätzlich das Element 18 an das Element 19 signalisiert, dass der Drehzahlsensor 6 und die Signalübertragung des Wertes für D1 fehlerfrei arbeiten. Ist dies nicht der Fall, so kann in einer Weiterbildung ersatzweise ein fest hinterlegter Drehzahlwert angenommen werden.

In der Fig. 2 ist eine Ausführungsform dargestellt, bei der das Element 19 über ein Element 17 mit dem Funktionsrechner 3 verbunden ist. Das Element 17 erhält vom Funktionsrechner 3 eine Drehzahlinformation D2 eines zusätzlichen Sensors 7. Dabei kann das Element 17, alternativ zur in Fig. 1 dargestellten Ausführungsform, auch im Funktionsrechner 3 angeordnet sein.

In einer Weiterbildung gibt das Element 17 nur dann ein Signal and das Element 19 weiter, wenn die Drehzahlinformation D2 den Grenzwert GR2 unterschreitet. In einer alternativen vereinfachten Ausführungsform gibt das Element 19 ein Signal an das Element 14 weiter, wenn dies der Fall ist.

In einer Weiterbildung dieser alternativen Ausführungsform wird die von dem zusätzlichen Drehzahlsensor 7 dem Funktionsrechner 3 zugeführte Drehzahlinformation D2 durch die von dem Drehzahlsensor 6 dem Funktionsrechner 3 zugeführte Drehzahlinformation D1 ersetzt, wenn der Funktionsrechner 3 einen Fehler des Drehzahlsensors 7 oder der Datenübertragung des Drehzahlsensors 7 erkennt. In diesem Fall gibt Element 17 entsprechend einer bevorzugten Weiterbildung nur dann ein Signal an das Element 19 weiter, wenn die im Funktionsrechner 3 erfasste Drehzahlinformation D1 den Grenzwert GR1 unterschreitet.

In einer bevorzugten Ausführungsform gibt in das Element 19 dann ein Signal an das Element 14 weiter, wenn die Elemente 17 und 20 jeweils eine Grenzwertunterschreitung erkennen und keine Informationen über eine fehlerhafte Erfassung oder Übertragung der grenzwert unterschreitenden Signale vorliegen.

Die Ansteuersignale, die der Schalter 10 über die Steuerleitung an den Schalter 14 weitergibt, werden auch an ein Element 12 weitergegeben. Anhand der Ansteuersignale von Schalter 10 erkennt das Element 12, ob ein Dreiphasenkurzschluss ausgelöst werden soll. Das Element 12 gibt diese Informationen an den Funktionsrechner 3 und an das Element 19 des Logikbausteins 5 weiter.

Das Element 12 ist außerdem mit der Endstufe 2 verbunden und erhält von dieser Informationen über deren Betriebszustand bzw. den Betriebszustand ihrer Schaltelemente 2o1, 2o2, 2o3, 2u1, 2u2, 2u3. Typischerweise wird dabei übermittelt, ob eine Spannung U_CE der Schaltelemente 2o1, 2o2, 2o3, 2u1, 2u2, 2u3 einen zulässigen Wert einnimmt. Anhand der Informationen von der Endstufe 2 erkennt das Element 12, ob die Endstufe 2 einen Dreiphasenkurzschluss der elektrischen Maschine 1 erzeugt. Liegt ein ordnungsgemäß durchgeführter Dreiphasenkurzschluss vor, so gibt das Element 12 diese Informationen an den Funktionsrechner 3 und an ein Element 19 der Logik 5. Liegt ein fehlerhaft durchgeführter Dreiphasenkurzschluss vor, so ist in einer Ausgestaltung vorgesehen, die Variante des Dreiphasenkurzschlusses von Kurzschluss der Schaltelemente 2o1, 2o2, 2o3 auf Kurzschluss der Schaltelemente 2o1, 2o2, 2o3, 2u1, 2u2, 2u3 oder umgekehrt zu wechseln.

In der in Fig. 2 dargestellten Ausführungsform sendet das Element 19 ein Abschaltsignal an Schalter 14, falls das Element 19 die Information erhält, dass der Funktionsrechner 3 über das Element 17 eine Drehzahl D2 bzw. D1 unterhalb des ihr zugeordneten Grenzwertes GR2 bzw. GR1 erkannt hat und das Element 12 einen Dreiphasenkurzschluss der Endstufe 2 und kein Anliegen eines Abschaltsignals von Element 9 an Schalter 10 erkannt hat. Hier ist anhand der in Element 19 vorliegenden Signale davon auszugehen, dass der Funktionsrechner 3 fehlerfrei arbeitet. Daher kann dem über das Element 17 weitergegebenen Signal vertraut werden und bei Unterschreitung der Grenzwertes GR2 bzw. GR1 durch D2 bzw. D1 die Umschaltung auf offene Schaltelemente 2o1, 2o2, 2o3, 2u1, 2u2, 2u3 durch senden eines Abschaltsignals an Schalter 14 initiiert werden. Dieses Verhalten kann genutzt werden, um einen Abschaltbefehl der von einem externen Steuergerät zugeführt wird und nicht auf einer Fehlererkennung des Funktionsrechners 3 oder des Überwachungsrechners 4 beruht in das Verfahren einzubinden. Damit ist es möglich auch für einen externen Abschaltbefehl drehzahlabhängig und/oder abhängig von einer Spannung U_DC einen Dreiphasenkurzschluss oder eine Abschaltung der elektrischen Maschine durch Öffnen aller Schaltelemente 2o1, 2o2, 2o3, 2u1, 2u2, 2u3 auszulösen.

In der in Fig. 2 dargestellten Ausführungsform sendet das Element 19 ein Abschaltsignal an Schalter 14, falls das Element 19 die Information erhält, dass das Element 20 die Drehzahl D1 als unterhalb des ihr zugeordneten Grenzwertes GR1 liegend erkannt hat und das Element 12 einen Dreiphasenkurzschluss der Endstufe 2 und das Anliegen eines Abschaltsignals von Element 9 an Schalter 10 erkannt hat. Liegt ein Abschaltsignal von Element 9 an Schalter 10 an, so kann den Daten vom Funktionsrechner 3 und von Überwachungsrechner 4 nicht mehr vertraut werden. Daher ist es sinnvoll in diesem Fall das von dem Funktionsrechner 3 an das Element 17 weitergegebene Drehzahlsignal nicht zu verwenden, sondern auf das direkt vom Sensor 6 an den Logikbaustein 5 weitergegebene Drehzahlsignal D1 zu vertrauen.

In diesem zuletzt dargestellten Fall muss in der in Fig. 2 dargestellten Ausführungsform zusätzlich das Element 18 an das Element 19 signalisieren, dass der Sensor 6 fehlerfrei arbeitet. Ist dies nicht der Fall, so kann ersatzweise ein fest hinterlegter Drehzahlwert angenommen werden. Dies gilt auch für den Fall, dass das Element 17 ersatzweise auf die Drehzahl D1 ausgewichen ist und Element 18 einen Fehler des Sensors 6 erkennt.

Empfängt der Schalter 14 ein Abschaltsignal vom Element 19, so schaltet er um und unterbricht so die Weitergabe der von Element 10 kommenden Ansteuersignale. Anstatt dieser Ansteuersignale werden nunmehr die Informationen eines Elements 13 der Logik 5 weitergegeben. Dabei handelt es sich bei dem Element 13 typischerweise um einen permanenten Speicher, in dem die Ansteuersignale für eine Öffnung aller Schaltelemente 2o1, 2o2, 2o3, 2u1, 2u2, 2u3 der Endstufe 2 fest hinterlegt sind.

Diese Ansteuersignale des Elements 13 werden über den Schalter 14 in die Steuerleitung eingespeist und über Schalter 16 an die Endstufe 2 weitergegeben. Die Endstufe 2 öffnet ihre Schaltelemente 2o1, 2o2, 2o3, 2u1, 2u2, 2u3 nach Maßgabe der ihr zugeführten Ansteuersignale Betriebsparameter und steuert so die elektrische Maschine 1 an.

Die Informationen, die der Schalter 14 über die Steuerleitung an den Schalter 16 weitergibt, werden auch an ein Element 21 weitergegeben. Anhand der Informationen von Schalter 14 erkennt das Element 21, ob alle Schaltelemente 2o1, 2o2, 2o3, 2u1, 2u2, 2u3 geöffnet werden soll. Diese Information gibt das Element 21 an den Funktionsrechner 3 weiter.

Die Endstufe 2 gibt Informationen über die an ihr anliegende Spannungen U_CE an ein Element 22 weiter. Element 22 ist ein Vergleicher der den zugeführten Wert für die Spannung U_CE mit einem Wert Umax vergleicht und ein Abschaltsignal an den Schalter 16 weitergibt, wenn U_CE größer als Umax ist.

Erhält der Schalter 16 von Element 22 ein Abschaltsignal, so schaltet er um und unterbricht so die Weitergabe der von Element 14 kommenden Ansteuersignale. Anstatt dieser Ansteuersignale werden nunmehr die Ansteuersignale eines Elements 15 der Logik 5 weitergegeben. Dabei handelt es sich bei dem Element 15 typischerweise um einen permanenten Speicher, in dem die Ansteuersignale für einen Dreiphasenkurzschluss der Endstufe 2 fest hinterlegt sind.

## Patentansprüche

1. Vorrichtung zum Betreiben einer elektrischen Maschine (1) mit einem Ansteuersystem (25) mit einer Endstufe (2),
- wobei die elektrische Maschine (1) durch das Ansteuersystem (25) abschaltbar ist,
- wobei ein externes Steuergerät (30) vorgesehen ist,
- wobei die elektrische Maschine (1) durch das externe Steuergerät (30) abschaltbar ist.
**dadurch gekennzeichnet, dass**
eine separate Abschaltleitung (34) zur schnellen Übertragung eines Abschaltsignals des externen Steuergerätes (30) vorgesehen ist, die das externe Steuergerät (30) mit dem Ansteuersystem (25) der elektrischen Maschine (1) verbindet.

2. Verfahren zum Betreiben einer elektrischen Maschine (1), insbesondere mit einer Vorrichtung nach Anspruch 1,
**dadurch gekennzeichnet, dass**
ein externes Steuergerät (30) ein Abschaltsignal an ein Ansteuersystem (25) der elektrischen Maschine (1) sendet, wenn das externe Steuergerät (30) einen Fehler erkennt.

3. Verfahren nach Anspruch 2,
**dadurch gekennzeichnet, dass**
das externe Steuergerät (30) dann einen Fehler erkennt, wenn ein Funktionsrechner (31) oder ein Überwachungsrechner (32) des externen Steuergerätes (30) einen Fehler erkennt.

4. Verfahren nach Anspruch 2 oder 3,
**dadurch gekennzeichnet, dass**
- das Abschaltsignal des externen Steuergerätes (30) einen Dreiphasenkurzschluss einer Endstufe (2) der elektrischen Maschine (1) auslöst, wenn eine erfasste Drehzahl einen ihr zugeordneten Grenzwert unterschreitet, und
- das Abschaltsignal des externen Steuergerätes (30) das Öffnen aller Leistungsschalter der Endstufe (2)auslöst, wenn die erfasste Drehzahl den ihr zugeordneten Grenzwert nicht unterschreitet.

5. Verfahren nach Anspruch 4,
**dadurch gekennzeichnet, dass**
das Abschaltsignal des externen Steuergerätes (30) einen Dreiphasenkurzschluss einer Endstufe (2) der elektrischen Maschine (1) auslöst, wenn eine erfasste Spannung U_DC einen ihr zugeordneten Grenzwert U_max überschreitet,

6. Verfahren nach einem der Ansprüche 2 bis 5,
**dadurch gekennzeichnet, dass**
zur Überprüfung der Abschaltung der elektrische Maschine (1) ein Abschaltpfadtest vorgesehen ist, der unter unterschiedlichen Bedingungen die fehlerfreie Durchführung der Abschaltung der elektrischen Maschine. (1) durch das externe Steuergerät (30) prüft.

## Claims

1. Device for operating an electric machine (1) comprising a control system (25) with an output stage (2),
- wherein the electric machine (1) can be switched off by the control system (25),
- wherein an external control unit (30) is provided,
- wherein the electric machine (1) can be switched off by the external control unit (30),
**characterised in that**
a separate switch-off line (34) is provided for the fast transmission of a switch-off signal of the external control unit (30), which switch-off line (34) connects the external control unit (30) to the control system (25) of the electric machine (1).

2. Method for operating an electric machine (1), in particular using a device according to claim 1,
**characterised in that**
an external control unit (30) transmits a switch-off signal to a control system (25) of the electric machine (1) if the external control unit (30) detects a fault.

3. Method according to claim 2,
**characterised in that**
the external control unit (30) detects a fault if a function computer (31) or a monitoring computer (32) of the external control unit (30) detects a fault.

4. Method according to claim 2 or 3,
**characterised in that**
- the switch-off signal of the external control unit (30) triggers a three-phase short circuit of an output stage (2) of the electric machine (1) if a detected speed falls below a limit value assigned to it, and
- the switch-off signal of the external control unit (30) triggers the opening of all circuit breakers of the output stage (2) if the detected speed does not fall below the limit value assigned to it.

5. Method according to claim 4,
**characterised in that**
the switch-off signal of the external control unit (30) triggers a three-phase short circuit of an output stage (2) of the electric machine (1) if a detected voltage U_DC exceeds a limit value U_max assigned to it.

6. Method according to any of claims 2 to 5,
**characterised in that**
for checking the switch-off of the electric machine (1), a switch-off path test is provided, which checks the faultless execution of the switch-off of the electric machine (1) by the external control unit (30) under various conditions.

## Revendications

1. Dispositif destiné à faire fonctionner une machine électrique (1) à l'aide d'un système de commande (25) présentant un étage de sortie (2),
- la machine électrique (1) pouvant être mise hors tension par le système de commande (25),
- un appareil de commande (30) externe étant prévu,
- la machine électrique (1) pouvant être mise hors tension par le système de commande (30), **caractérisé en ce qu'**un circuit de mise hors tension séparé (34) destiné à la transmission rapide d'un signal de mise hors tension de l'appareil de commande externe (30) permet de relier l'appareil de commande externe (30) au système de commande (25) de la machine électrique (1).

2. Procédé destiné à faire fonctionner une machine électrique (1), en particulier comprenant un dispositif selon la revendication 1, **caractérisé en ce qu'**un appareil de commande externe (30) envoie un signal de mise hors tension à un système de commande (25) de la machine électrique (1) lorsque l'appareil de commande externe (30) reconnaît une erreur.

3. Procédé selon la revendication 2, **caractérisé en ce que** l'appareil de commande externe (30) reconnaît alors une erreur lorsqu'un ordinateur de traitement (31) ou un ordinateur de contrôle (32) de l'appareil de commande externe (300) reconnaît une erreur.

4. Procédé selon la revendication 2 ou la revendication 3, **caractérisé en ce que**
- le signal de mise hors tension de l'appareil de commande externe (30) déclenche un court-circuit triphasé d'un étage de sortie (2) de la machine électrique (1) lorsque une vitesse détectée est inférieure à une valeur limite lui étant associée, et
- le signal de mise hors tension de l'appareil de commande externe (30) déclenche l'ouverture de tous les commutateurs de puissance de l'étage de sortie (2) lorsque la vitesse détectée n'est pas inférieure à la valeur limite lui étant associée.

5. Procédé selon la revendication 4, **caractérisé en ce que** le signal de mise hors circuit de l'appareil de commande externe (30) déclenche un court-circuit triphasé d'un étage de sortie (2) de la machine électrique (1) lorsque une tension détectée U_DC est supérieure à une valeur limite U_max lui étant associée.

6. Procédé selon l'une quelconque des revendications précédentes 2 à 5, **caractérisé en ce que** pour contrôler la mise hors tension de la machine électrique (1) un test de chemin de mise hors tension est prévu, qui dans différentes conditions, contrôle l'exécution sans défaut de la mise hors tension de la machine électrique (1) au moyen de l'appareil de commande externe (30).
